# EUROPEAN PATENT SPECIFICATION

(11) **EP 2 863 742 B1**
(45) Date of publication and mention of the grant of the patent: **31.07.2019**
(21) Application number: 13810663.8
(22) Date of filing: 20.06.2013
(51) Int. Cl.: A01N 25/28, A01N 25/22, A01N 47/16, A01N 25/04, A01N 53/00, A01P 3/00, A01P 7/00

(54) **MICROCAPSULE**
MIKROKAPSEL
MICROCAPSULE

(30) Priority: 26.06.2012 JP 2012142763
(43) Date of publication of application: 29.04.2015
(73) Proprietor: Sumitomo Chemical Company, Limited, Tokyo 104-8260 (JP)
(72) Inventor: YANAGISAWA, Kazuyuki, Takarazuka-shi Hyogo 665-8555 (JP); MIZUTANI, Motofumi, Tokyo 104-8260 (JP)
(74) Representative: Thurston, Joanna
(86) International application number: PCT/JP2013/067587
(87) International publication number: WO 2014/003084

(56) References cited:
- GB-A- 1 513 614
- JP-A- S5 939 807
- JP-A- H11 504 030
- JP-A- S62 215 504
- JP-A- S62 215 505
- JP-A- 2002 316 902
- JP-A- 2003 040 706
- JP-A- 2003 040 706
- JP-A- 2011 514 842
- JP-B2- H0 676 287
- US-A- 5 846 554
- US-A1- 2003 134 910
- US-A1- 2008 125 480
- US-A1- 2010 173 781
- US-A1- 2012 004 104

## Description

### TECHNICAL FIELD

The present invention relates to a microcapsule that inhibits photodegradation of an agriculturally active ingredient including fenpyrazamine.

### BACKGROUND ART

Various studies have hitherto been made for the purpose of inhibiting photodegradation of agriculturally active ingredients which are unstable against light. There has been known a microcapsule in which an agriculturally active ingredient, and UV protectants such as titanium dioxide and zinc oxide are contained in an organic solvent (see, for example, JP 11-504030 W).

JP-H06-76287 B2 relates to an agricultural, insecticidal and acaricidal composition, obtained by encapsulating a pyrethroid insecticide and acaricide in polyurea based films to form microcapsules, capable of exhibiting improved residual efficacy and having reduced toxicity to fishes. JP-2003/040706 A relates to a vermin-controlling microencapsulated composition for controlling harmful organisms such as harmful insects to a wood and external parasitic worms to an animal. US-2010/173781 A1 relates to a method for modulating the release rate of microencapsulated active ingredients. GB-1,513,614 relates to a microcapsule insecticide composition comprises microcapsules having a polyurea shell including, as an integral part of the shell, a photostable ultra violet light absorbent compound having a log molar extinction coefficient of from 2 to 5 with respect to radiation having wave lengths in the range of from 270 to 350 mm and a liquid fill capable of slowly permeating the shell and comprising a pyrethroid and a pyrethrin synergist. US-5,846,554 relates to microcapsules containing a UV-sensitive biologically active material, which contain an ultraviolet light protectant selected from titanium dioxide, zinc oxide and mixtures thereof, suspended and thoroughly dispersed in a liquid. US-2008/125480 relates to oil-in-water emulsion formulations (EW) of avermectins based on phthalates as organic solvent and the use of such formulations for the control of pests. US-2012/004104 relates to selective insect neonicotinoids that bind to nAChR acetylcholine receptors.

### DISCLOSURE OF INVENTION

### [Problems to be Solved by the Invention]

An object of the present invention is to provide a new microcapsule that inhibits the photodegradation of an agriculturally active ingredient including fenpyrazamine.

### [Means for Solving the Problems]

The present inventors have intensively been studied so as to find a microcapsule in which photodegradation of an agriculturally active ingredient comprising fenpyrazamine has been inhibited. This aim has been achieved by providing a microcapsule comprising:
(a) an agriculturally active ingredient which includes fenpyrazamine, wherein after irradiation with xenon light of wavelength 290 nm or more at an intensity of 0.68 W/m² at 340 nm for 8 hours the amount of agriculturally active ingredient remaining is less than 50% , wherein the agriculturally active ingredient *per se* is solid at 25°C; and
(b) a water-immiscible organic solvent;
   wherein a weight ratio of the agriculturally active ingredient to the water-immiscible organic solvent is from 30:70 to 70:30, and wherein the microcapsule has an volume median diameter of 10 to 45 µm; and
   wherein the water-immiscible organic solvent(s) is/are one or more water-immiscible organic solvent(s) selected from the group consisting of aromatic ketones and aromatic hydrocarbons.

When a weight ratio of the component a to the component b is within a specific range, it is possible to inhibit photodegradation of the component a.

The present invention includes the following:
[1] A microcapsule comprising:
   (a) an agriculturally active ingredient which includes fenpyrazamine, wherein after irradiation with xenon light of wavelength 290 nm or more at an intensity of 0.68 W/m² at 340 nm for 8 hours the amount of agriculturally active ingredient remaining is less than 50% , wherein the agriculturally active ingredient *per se* is solid at 25°C; and
   (b) a water-immiscible organic solvent;
      wherein a weight ratio of the agriculturally active ingredient to the water-immiscible organic solvent is from 30:70 to 70:30, and wherein the microcapsule has an volume median diameter of 10 to 45 µm;
      wherein the water-immiscible organic solvent(s) is/are one or more water-immiscible organic solvent(s) selected from the group consisting of aromatic ketones and aromatic hydrocarbons.
[2] The microcapsule according to [1], wherein the water-immiscible organic solvent(s) comprises acetophenone.
[3] A pesticidal composition in the form of an aqueous suspension in which the microcapsule according to any one of [1] or [2] is suspended in an aqueous continuous phase.

### [Effects of the Invention]

According to the present invention, it is possible to inhibit photodegradation of an agriculturally active ingredient comprising fenpyrazamine.

### MODE FOR CARRYING OUT THE INVENTION

The microcapsule of the present invention (hereinafter sometimes referred to as a microcapsule of the present invention) is a microcapsule containing an agriculturally active ingredient, which includes fenpyrazamine, which is significantly unstable against light, yet the microcapsule can effectively inhibit photodegradation of the agriculturally active ingredient.

As used herein, xenon light means a light source in which a gas filled in a tube is xenon. Usually, xenon light means uniquely the same spectrum. Xenon light (290 nm cutoff) means xenon light having a wavelength within a range of 290 nm or more, and xenon light passed through a borosilicate filter corresponds to this.

A method for the calculation of a retention rate of the agriculturally active ingredient defined above is more specifically as follows. First, 250 mg of the agriculturally active ingredient is dissolved in 50 mL of a solvent such as acetone, which can sufficiently dissolve the agriculturally active ingredient and also has high volatility, and 1 mL of the solution is added to a glass petri dish having a diameter of 6 cm using a one-mark pipette, spread entirely over the petri dish, and then air-dried at room temperature. The petri dish is covered with a lid made of quartz glass and then set in a weathering tester (manufactured by Q-Lab Corporation under the trade name of Q-SUN Xenon Accelerated Weathering Tester, Model Xe-3) equipped with a borosilicate filter (manufactured by Q-Lab Corporation under the trade name of Daylight-BB Optical Filter) attached thereto. After irradiation with xenon light under the conditions of an intensity at 340 nm of 0.68 W/m² and a temperature of 35°C (35°C as measured by an insulated black panel thermometer) for 8 hours, the amount of the agriculturally active ingredient remaining on the petri dish is determined by a known determination method such as high-performance liquid chromatography. It is possible to determine a retention rate by calculating as the weight percentage relative to 5 mg of the agriculturally active ingredient used above.

The agriculturally active ingredient of the invention includes fenpyrazamine.

It is also disclosed that alternative active ingredients include allethrin and prallethrin. The retention rates of fenpyrazamine, allethrin, and prallethrin after irradiation with xenon light (290 nm cutoff) at an intensity of 0.68 W/m² at 340 nm for 8 hours according to the method for calculation above-mentioned, are 28.1%, 3.3% and 6.4%, respectively.

In the microcapsule of the present invention, a component b means an organic solvent which is liquid at normal temperature (25°C) and is immiscible in water. Specifically, an organic solvent having water solubility of 20% by weight or less at 25°C is used. The water-immiscible organic solvent(s) is/are one or more water-immiscible organic solvent(s) selected from the group consisting of aromatic ketones and aromatic hydrocarbons. Examples of these solvents are as follows:
Aromatic Ketones: acetophenone; and
Aromatic hydrocarbons: toluene, xylene, phenylxylylethane, 1-phenyl-1-ethylphenylethane, methylnaphthalene, dimethylnaphthalene, triisopropylbiphenyl and dimethylisopropylnaphthalene.

In the present invention, commercially available aromatic hydrocarbon solvents can be used as aromatic hydrocarbons. Examples of the commercially available aromatic hydrocarbon solvents include Hisol SAS-296 (mixture of 1-phenyl-1-xylylethane and 1-phenyl-1-ethylphenylethane, trade name of JX Nippon Oil & Energy Corporation), Hisol SAS-LH (trade name of JX Nippon Oil & Energy Corporation), CACTUS SOLVENT HP-MN (methylnaphthalene 80%, trade name of JX Nippon Oil & Energy Corporation), CACTUS SOLVENT HP-DMN (dimethylnaphthalene 80%, trade name of JX Nippon Oil & Energy Corporation), CACTUS SOLVENT P-180 (mixture of methylnaphthalene and dimethylnaphthalene, trade name of JX Nippon Oil & Energy Corporation), CACTUS SOLVENT P-200 (mixture of methylnaphthalene and dimethylnaphthalene, trade name of JX Nippon Oil & Energy Corporation), CACTUS SOLVENT P-220 (mixture of methylnaphthalene and dimethylnaphthalene, trade name of JX Nippon Oil & Energy Corporation), CACTUS SOLVENT PAD-1(dimethylmonoisopropylnaphthalene, trade name of JX Nippon Oil & Energy Corporation), Solvesso 100 (aromatic hydrocarbon, trade name of ExxonMobil Chemical Ltd.), Solvesso 150 (aromatic hydrocarbon, trade name of ExxonMobil Chemical Ltd.), Solvesso 200 (aromatic hydrocarbon, trade name of ExxonMobil Chemical Ltd.), Solvesso 150ND (aromatic hydrocarbon, trade name of ExxonMobil Chemical Ltd.), Solvesso 200ND (aromatic hydrocarbon, trade name of ExxonMobil Chemical Ltd.), Ruetasolv BP 4302 (manufactured by RKS GmbH), NIKANOL (trade name of Fudow Company Limited.), SWASOL 100 (toluene, trade name of Maruzen Petrochemical CO, LTD.), and SWASOL 200 (xylene, trade name of Maruzen Petrochemical CO, LTD.).

Of these, aromatic ketones such as acetophenone are more preferably used.

In the microcapsule of the present invention, the weight ratio of the component a to the component b is from 30:70 to 70:30.

It is preferred that the microcapsule of the present invention further contains one or more UV protectants. Examples of the UV protectants include benzophenone-based ultraviolet absorbers such as 2,4-dihydroxybenzophenone, 2-hydroxy-4-methoxybenzophenone, and 2-hydroxy-4-n-octyl-benzophenone; benzotriazole-based ultraviolet absorbers such as 2-(2-hydroxy-5-methylphenyl)benzotriazole, 2-[2-hydroxy-3-(3,4,5,6-tetrahydrophthalimide-methyl)-5-methylphenyl]benzotriazole, 2-(3-tert-butyl-2-hydroxy-5-methylphenyl)-5-chlorobenzotriazole, 2-(2-hydroxy-5-tert-octylphenyl)benztriazole, and 2-(2-hydroxy-3,5-di-tert-pentylphenyl)benzotriazole; benzoate-based ultraviolet absorbers such as 2,4-di-tert-butylphenyl 3,5-di-tert-butyl-4-hydroxybenzoate; hydroxyphenyltriazine-based ultraviolet absorber such as 2-(2-hydroxy-4-[1-octyloxycarbonylethoxy]phenyl)-4,6-bis(4-phenylphenyl)-1,3,5-triazine; photostabilizers such as non-sulfonated lignin (for example, manufactured by MeadWestvaco Corporation under the trade name of INDULIN AT) and a hindered amine-based photostabilizer (HALS); and inorganic UV shielding agents such as titanium oxide.

There is no particular limitation on the UV protectant used in the microcapsule of the present invention, and it is preferred to use a UV protectant which is miscible in the component b.

When the microcapsule of the present invention contains the UV protectant (hereinafter sometimes referred to as a component c), the total content is usually from 1 to 50% by weight, and preferably from 3 to 35% by weight, based on the entire amount of the microcapsule of the present invention,.

The microcapsule of the present invention is a microcapsule in which liquid droplets containing a component a, a component b, and more preferably a component c are coated with a resin. The component a is suspended or dissolved in the component b and, when the component c is contained, the component c is suspended or dissolved in the component b.

A film in the microcapsule of the present invention is formed from the resin. The resin includes, for example, thermosetting resins such as a polyurethane resin, a polyurea resin, a urea-formalin resin, a melamine-urea resin, and a phenol-formalin resin.

Of these resins, a polyurethane resin or a polyurea resin is preferably used.

The polyurethane resin or polyurea resin used preferably as a resin which forms a film of the microcapsule of the present invention is usually a resin obtained by reacting polyisocyanate with polyol or polyamine.

The polyisocyanate includes, for example, hexamethylene diisocyanate, adduct of hexamethylene diisocyanate and trimethylolpropane, biuret condensate of three molecules of hexamethylene diisocyanate, adduct of tolylene diisocyanate and trimethylolpropane, isocyanurate condensate of tolylene diisocyanate, isocyanurate condensate of hexamethylene diisocyanate, isocyanurate condensate of isophorone diisocyanate, isocyanate prepolymer in which one isocyanate moiety of hexamethylene diisocyanate composes isocyanurate together with two molecules of tolylene diisocyanate, and the other isocyanate moiety composes isocyanurate together with two molecules of the other hexamethylene diisocyanate, 4,4'-methylenebis(cyclohexyl isocyanate), and trimethyl hexamethylene diisocyanate.

The amount of the polyisocyanate used in the present invention is usually determined depending on the amount of the film of the obtained microcapsule. The amount of the film of the obtained microcapsule is usually from 0.1 to 40% by weight, and preferably from 0.2 to 30% by weight, based on the entire amount of the obtained microcapsule. The amount of the polyisocyanate used in the present invention is usually from 25 to 95% by weight, and preferably from 50 to 90% by weight, based on the amount of the film of the obtained microcapsule.

The polyol includes, for example, ethylene glycol, propylene glycol, butylene glycol, and cyclopropylene glycol.

The polyamine includes, for example, ethylenediamine, hexamethylenediamine, diethylenetriamine, and triethylenetetramine.

The amount of the polyol or polyamine used in the present invention is usually determined depending on the amount of the film of the obtained microcapsule. The amount of the polyol used in the present invention is usually from 1 to 80% by weight, and preferably from 3 to 60% by weight, based on the amount of the film of the microcapsule. The amount of the polyamine used in the present invention is usually from 1 to 40% by weight, and preferably from 3 to 20% by weight, based on the amount of the film of the microcapsule.

A method for producing the microcapsule of the present invention (hereinafter sometimes referred to as a present production method) will be described, but the present production method is not limited only to the following method.

The present production method includes the following first to third steps.

The first step of the present production method is the step of suspending or dissolving a component a in a component b to prepare a suspension or a solution of the component a.

The component a is suspended or dissolved in the component b.

Since the agriculturally active ingredient *per se* is solid at normal temperature (25°C) (hereinafter sometimes referred to as a solid component a), it is possible to take the form of a suspension (hereinafter sometimes referred to as a present suspension a) depending on solubility of the solid component a in the component b and a weight ratio of the solid component a to the component b. The present suspension a can be prepared by finely grinding the solid component a in the component b using a wet grinding mill such as a beads mill. It is also possible to prepare by finely grinding the solid component a with or without adding other components using a dry grinding mill such as a jet mill, and adding the thus obtained finely ground powder to the component b.

The solution in which a component a is dissolved in a component b can be prepared by dissolving the component a in the component b

When the solid component a is dispersed (that is, suspended) in the component b in the form of fine particles, an average particle diameter of the fine particles is usually 15 µm or less, preferably 1 to 10 µm, and more preferably 1 to 5 µm.

When the microcapsule of the present invention contains the component c, the first step includes the step of respectively suspending or dissolving the component a and the component c in the component b to prepare a suspension or a solution of the component a and the component c.

In the suspension or solution of the component a and the component c, the component a and the component c take any one of the following forms (1) to (4).
(1) Both the component a and the component c are suspended in the component b.
(2) The component c is dissolved in the component b, and the component a is suspended in the component b in which the component c has been dissolved.
(3) The component a is dissolved in the component b, and the component c is suspended in the component b in which the component a has been dissolved.
(4) Both the component a and the component c are dissolved in the component b.

The solid component a can take the form (1) or (2) depending on solubility of the solid component a in the component b and a weight ratio of the solid component a to the component b. When the component c is a component c which is solid at normal temperature (25°C) (hereinafter sometimes referred to as a solid component c), the component c can take the form (1) or (3) depending on solubility of the solid component c to the component b and a weight ratio of the solid component c to the component b.

Suspensions of (1) to (3) can be prepared by the same operation as in a method for preparing the present suspension a. In the case of preparing the suspension (1), the solid component a and the solid component c may be finely milled at the same time by a wet grinding mill or a dry grinding mill, or the present suspension a and a suspension in which the solid component c has been suspended in the component b may be separately prepared, followed by mixing, in the method for preparing the present suspension a. In the case of preparing the suspension (2), usually, the component c is dissolved in the component b and then the solid component a is added to the solution. In the case of preparing the suspension (3), usually, the component a is dissolved in the component b and then the solid component c is added to the solution.

The solution (4) can be prepared by dissolving the component a and the component c in the component b.

When the resin composing the film is a polyurethane resin or a polyurea resin, usually, polyisocyanate is added in advance to the suspension or solution obtained in the first step.

It is preferred that the suspension or solution, which is obtained in the first step in which the component a and optionally added component c are suspended or dissolved in the component b, is quickly used in the subsequent step.

The second step of the present production method is the step of mixing the suspension or solution obtained in the first step with water to prepare liquid droplets.

The amount of water used in the second step is usually within a range of 0.8 to 2 times more than that of the suspension or solution obtained in the first step. Deionized water is preferably used as water used in the second step, and a thickener may be added to water.

Examples of the thickener include natural polysaccharides such as gum arabic, xanthan gum, rhamsan gum, locust bean gum, guar gum, carrageenan, welan gum, alginic acid, alginate, and gum tragacanth; vinyl-based polymers such as polyvinyl alcohol, polyvinylpyrrolidone, vinyl acetate copolymer, and sodium polyacrylate; synthetic polymers such as polyoxyalkylene; semi-synthetic polymers such as carboxymethyl cellulose; mineral matter powders such as aluminum silicate, magnesium aluminum silicate, smectite, bentonite, hectorite, synthetic hydrated silicic acid, and dry silica; and alumina sol. It is possible to use, as these thickeners, commercially available products as they are. Examples of commercially available products include KELZAN S (trade name of CP Kelco, Inc.) as xanthan gum, VEEGUM Granules (trade name of Vanderbilt Company, Inc.) as aluminum silicate, and Aerosil 200 (trade name of Evonik Degussa Corporation) as dry silica.

In the second step, the method for preparing liquid droplets in water includes, for example, a method in which water is added to the suspension or solution obtained in the first step, followed by stirring using a stirrer. The stirrer used in this case includes, for example, a propeller stirrer, a turbine stirrer, and a high-speed shear stirrer. Specific examples of the stirrer include T.K. Homo Mixer, T.K. Homomic Line Flow, T.K. Pipeline Homo Mixer, and T.K. Filmix manufactured by PRIMIX Corporation; CLEARMIX manufactured by M Technique Co., Ltd.; POLYTRON homogenizer and MEGATRON homogenizer manufactured by KINEMATICA AG; and SUPRATON manufactured by Tsukishima Kikai Co., Ltd.

In the second step, usually, liquid droplets are prepared in water, and then polyol or polyamine is added. When polyol is added, a microcapsule with a film formed of a polyurethane resin is obtained. When polyamine is added, a microcapsule with a film formed of a polyurea resin is obtained. The polyol or polyamine may be added before preparing liquid droplets in water, and is preferably added after preparation so as to prevent polyisocyanate during preparation of liquid droplets from reacting with polyol or polyamine.

The third step is the step of forming a film of a resin around the liquid droplets obtained in the second step. In the liquid droplets existing in water obtained in the second step, polyisocyanate is dissolved in the component b. Therefore, polyisocyanate contained in the liquid droplets react with polyol or polyamine existing in water at an interface of the liquid droplets. As a result, a film of polyurethane or polyurea is formed around the liquid droplets, and thus a microcapsule is obtained as an aqueous suspension.

When the resin composing the film is a polyurethane resin, for example, a water dispersion of the liquid droplets obtained in the second step is heated at 40 to 80°C under stirring, followed by maintaining for 0.5 to 48 hours, whereby, a film of the polyurethane resin is formed around the liquid droplets. When the resin composing the film is a polyurea resin, for example, the pH of a water dispersion of the liquid droplets is adjusted within a range of neutral to weak alkaline, followed by maintaining at 0 to 60°C for about 0.5 to 48 hours, whereby, a film of the polyurea resin is formed around the liquid droplets.

An average particle diameter of the microcapsule of the present invention is almost the same as that of liquid droplets prepared in the second step. The average particle diameter of liquid droplets prepared in the second step and that of the microcapsule of the present invention are from 10 to 45 µm.

In the present invention, the average particle diameter means a volume median diameter. The volume median diameter refers to a particle diameter at which a cumulative frequency in a volume equivalent frequency distribution is to be 50%, and the volume median diameter can be determined, for example, by wet measurement using a laser diffraction particle size distribution measuring apparatus. More specifically, liquid droplets or microcapsules are dispersed in water and then the volume median diameter is measured using the apparatus. The laser diffraction particle size distribution measuring apparatus includes, for example, Mastersizer 2000 (manufactured by Malvern Instruments Ltd.).

By the present production method, the microcapsule of the present invention is obtained as a composition in the form of an aqueous suspension.

The microcapsule of the present invention obtained by the present production method can be used as a powder formulation of a microcapsule from a composition in the form of an aqueous suspension by centrifugal separation, filtration, spray drying or the like.

To the composition in the form of an aqueous suspension of the microcapsule of the present invention obtained by the present production method, pesticide auxiliary agents which are used in a conventional pesticidal composition in the form of an aqueous suspension is added, whereby, it is possible to use as a pesticidal composition in the form of an aqueous suspension in which the microcapsule of the present invention is suspended in an aqueous continuous phase (hereinafter sometimes referred to as a composition of the present invention). In this case, the microcapsule of the present invention obtained by the present production method is used, for example, as a pesticidal composition in the form of an aqueous suspension, containing the component a in the amount of 0.5 to 25% by weight based on the entire amount of the composition of the present invention.

Examples of the pesticide auxiliary agents which may be contained in the composition of the present invention include surfactants, thickeners, defoamers, preservatives, antifreezing agents, pH adjustors and the like.

Examples of the surfactants include nonionic surfactants, cationic surfactants, anionic surfactants, and amphoteric surfactants. Examples of nonionic surfactant include polyoxyethylene alkyl ether, polyoxyethylene alkyl aryl ether, polyoxyethylene lanolin alcohol, polyoxyethylene alkyl phenol formalin condensate, polyoxyethylene sorbitan fatty acid ester, polyoxyethylene glyceryl monofatty acid ester, polyoxypropylene glycol monofatty acid ester, polyoxyethylene sorbitol fatty acid ester, polyoxyethylene castor oil derivative, polyoxyethylene fatty acid ester, higher fatty acid glycerol ester, sorbitan fatty acid ester, sucrose fatty acid ester, polyoxyethylene polyoxypropylene block polymer, polyoxyethylene fatty acid amide, alkylol amide, polyoxyethylenealkylamine, and polyoxyethylene alkanediol. Examples of cationic surfactants include alkylamine hydrochlorides such as dodecylamine hydrochloride; alkyl quaternary ammonium salts such as dodecyltrimethyl ammonium salt, alkyldimethylbenzyl ammonium salt, alkylpyridinium salt, alkylisoquinolinium salt, and dialkylmorpholinium salt; benzethonium chloride, and polyalkyl vinyl pyridinium salt. Examples of anionic surfactants include fatty acid sodium such as sodium palmitate; sodium ether carboxylate such as sodium polyoxyethylene lauryl ether carboxylate; amino acid condensates of higher fatty acid, such as sodium lauroyl sarcosine and sodium N-lauroyl glutamate; higher fatty acid ester sulfonates such as higher alkyl sulfonate and lauric acid ester sulfonic acid salt; dialkyl sulfosuccinates such as dioctyl sulfosuccinate; higher fatty acid amide sulfonates such as oleic acid amide sulfonic acid; alkyl aryl sulfonates such as sodium dodecylbenzene sulfonate and diisopropyl naphthalene sulfonate; higher alcohol sulfuric acid ester salts such as formalin condensate of alkyl aryl sulfonate and pentadecane-2-sulfate; polyoxyethylene alkyl phosphate esters such as dipolyoxyethylene dodecyl ether phosphate; styrenemaleic acid copolymer; and lignin sulfonate.

Examples of amphoteric surfactants include N-laurylalanine, N,N,N-trimethylaminopropionic acid, N,N,N-trihydroxyethylaminopropionic acid, N-hexyl-N,N-dimethylaminoacetic acid, 1-(2-carboxyethyl)pyridinium betaine, and lecithin.

When the composition of the present invention contains the surfactant, the total content is usually from 0.1 to 20% by weight, and preferably from 0.5 to 10% by weight, based on the entire amount of the composition of the present invention.

Examples of the thickeners include those exemplified previously.

When the composition of the present invention contains the thickener, the total content is usually from 0.01 to 10% by weight, and preferably from 0.1 to 5% by weight, based on the entire amount of the composition of the present invention.

Examples of the defoamer include silicone-based defoamers such as ANTIFOAM C EMULSION (trade name of Dow Corning Toray Co., Ltd.), ANTIFOAM CE (trade name of Dow Corning Toray Co., Ltd.), TSA730 (trade name of MOMENTIVE PERFORMANCE MATERIALS JAPAN LLC), TSA731 (trade name of MOMENTIVE PERFORMANCE MATERIALS JAPAN LLC), TSA732 (trade name of MOMENTIVE PERFORMANCE MATERIALS JAPAN LLC), and YMA6509 (trade name of MOMENTIVE PERFORMANCE MATERIALS JAPAN LLC); and fluorine-based defoamers such as Fluowet PL80 (trade name of Clariant GmbH).

When the composition of the present invention contains the defoamer, the total content is usually from 0.01 to 3% by weight, and preferably from 0.05 to 1% by weight, based on the entire amount of the composition of the present invention.

Examples of the preservative include p-hydroxybenzoic acid ester, salicylic acid derivative, proxel (1,2-benzisothiazolin-3-one), and isothiazolin-3-one derivative (for example, BIOHOPE L (trade name of KI Chemical Industry Co., Ltd.)).

When the composition of the present invention contains the preservative, the total content is usually from 0.01 to 5% by weight, and preferably from 0.05 to 3% by weight, based on the entire amount of the composition of the present invention.

Examples of the antifreezing agent include watersoluble glycols such as ethylene glycol and propylene glycol.

When the composition of the present invention contains the antifreezing agent, the total content is usually from 0.5 to 30% by weight, and preferably from 1 to 20% by weight, based on the entire amount of the composition of the present invention.

Examples of the pH adjustor include citric acid monohydrate, sorbic acid, potassium sorbate, disodium hydrogen phosphate, dipotassium hydrogen phosphate, and sodium hydroxide.

When the composition of the present invention contains the pH adjustor, the total content is usually from 0.01 to 5% by weight, and preferably from 0.5 to 3% by weight, based on the entire amount of the composition of the present invention.

There is no particular limitation on water used in the composition of the present invention, and it is possible to use water used in a conventional pesticidal composition in the form of an aqueous suspension, such as tap water, well water, and deionized water.

The composition of the present invention usually contains water in the amount of 40 to 95% by weight, and preferably 45 to 90% by weight, based on the entire amount of the composition of the present invention.

The composition of the present invention can be applied to places such as paddy fields, cultivated lands, orchards, grass plot, and non-agricultural lands in the same manner as in the case of a conventional pesticidal composition in the form of an aqueous suspension. The composition of the present invention is optionally diluted with water and then the obtained water dilution can be applied by a method in which the composition is applied to plants growing in the above places or the soil in the above places. Examples of the method for applying the water dilution include a soil surface application or foliage application method of the water dilution using a known sprinkler.

It is also possible to use the water dilution in a seed treatment, a seedling raising box treatment and the like.

The composition of the present invention can be applied as it is without being diluted with water and, for example, the composition of the present invention is applied along from levee to levee of paddy fields under flooding. Before application, the composition of the present invention is usually mixed by slightly shaking a vessel containing the composition of the present invention.

### [Example]

The present invention will be described in further detail below by way of Examples, but the present invention is not limited only to these Examples.

First, Preparation Examples and Comparative Preparation Examples are shown.

### reparation Example 1

Fenpyrazamine was dry-milled by a vertical type jet mill (JOM-0101-type jet mill, manufactured by Seishin Enterprise Co., Ltd.) to prepare fenpyrazamine fine powders having an average particle diameter of 5 µm or less. Ten (10) parts by weight of fenpyrazamine fine powders, 0.2 part by weight of polyisocyanate (manufactured by Sumika Bayer Urethane Co., Ltd. under the trade name of Sumidur L-75), and 19.8 parts by weight of an aromatic hydrocarbon (manufactured by ExxonMobil Chemical Ltd. under the trade name of Solvesso 200ND) were mixed together to obtain a fenpyrazamine suspension. Then, 30 parts by weight of the suspension was added to 33 parts by weight of an aqueous 5% by weight polyvinyl alcohol (manufactured by The Nippon Synthetic Chemical Industry Co., Ltd. under the trade name of GOHSENOL GH-17) solution. This mixture was stirred by a rotor-stator homogenizer (manufactured by KINEMATICA AG under the trade name of POLYTRON homogenizer) thereby emulsifying the fenpyrazamine suspension in the aqueous polyvinyl alcohol solution to obtain a fenpyrazamine emulsion. To the obtained emulsion, 2 parts by weight of an aqueous 1.2% by weight diethylenetriamine (manufactured by Wako Pure Chemical Industries, Ltd.) solution was added, followed by stirring at 60°C for 3 to 4 hours to obtain an aqueous suspension composition of a microcapsule containing fenpyrazamine.

To 14.2 parts by weight of deionized water, 0.4 part by weight of magnesium aluminum silicate (manufactured by Vanderbilt Company, Inc. under the trade name of VEEGUM Granules) was added, followed by stirring at room temperature for 15 minutes. To the solution, 0.2 part by weight of xanthan gum (manufactured by CP Kelco, Inc. under the trade name of KELZAN S) and 5 parts by weight of propylene glycol were added. This mixture was stirred at 60°C for 60 minutes. The obtained dispersion was cooled to room temperature, and then 0.2 part by weight of an preservative (manufactured by Arch Chemicals, Inc. under the trade name of proxel GXL) was added to the dispersion to give a viscosity modifying liquid. Twenty (20) parts by weight of the viscosity modifying liquid, 15 parts by weight of water, and 65 parts by weight of the above aqueous suspension composition were mixed together to obtain the composition (1) of the present invention, containing 10% by weight of fenpyrazamine. A microcapsule containing fenpyrazamine had an average particle diameter of 40.1 µm.

### Preparation Example 2 (Reference)

By performing the same operation as in Preparation Example 1, except that the amount of the fenpyrazamine fine powders prepared in Preparation Example 1 was changed from 10 parts by weight to 5 parts by weight, and the amount of the aromatic hydrocarbon (the same as mentioned above) was changed from 19.8 parts by weight to 24.8 parts by weight, the composition (2) of the present invention, containing 5% by weight of fenpyrazamine was obtained. A microcapsule containing fenpyrazamine had an average particle diameter of 44.1 µm.

### Preparation Example 3

By performing the same operation as in Preparation Example 1, except that the average particle diameter of the microcapsule containing fenpyrazamine was changed from 40.1 µm to 11.1 µm by adjusting a stirring force using the rotor-stator homogenizer (the same as mentioned above), the composition (3) of the present invention, containing 10% by weight of fenpyrazamine was obtained.

### Preparation Example 4 (Reference)

By performing the same operation as in Preparation Example 1, except that the average particle diameter of the microcapsule containing fenpyrazamine was changed from 40.1 µm to 4.2 µm by adjusting a stirring force using the rotor-stator homogenizer (the same as mentioned above), the composition (4) of the present invention, containing 10% by weight of fenpyrazamine was obtained.

### Preparation Example 5 (Reference)

By performing the same operation as in Preparation Example 1, except that diisobutyl adipate (manufactured by Kao Corporation under the trade name of Vinisizer 40) was used in place of the aromatic hydrocarbon (the same as mentioned above), the composition (5) of the present invention, containing 10% by weight of fenpyrazamine was obtained. A microcapsule containing fenpyrazamine had an average particle diameter of 33.2 µm.

### Preparation Example 6

By performing the same operation as in Preparation Example 1, except that acetophenone (manufactured by Wako Pure Chemical Industries, Ltd.) was used in place of the aromatic hydrocarbon (the same as mentioned above), and the average particle diameter of the microcapsule containing fenpyrazamine was changed from 40.1 µm to 13.3 µm by adjusting a stirring force using the rotor-stator homogenizer (the same as mentioned above), the composition (6) of the present invention, containing 10% by weight of fenpyrazamine was obtained.

### Preparation Example 7

Ten (10) parts by weight of fenpyrazamine fine powders prepared in Preparation Example 1, 0.2 part by weight of polyisocyanate (the same as mentioned above), 14.8 parts by weight of the aromatic hydrocarbon (the same as mentioned above), and 5 parts by weight of a benzotriazole-based ultraviolet absorber (manufactured by BASF Corporation under the trade name of Tinuvin 571) were uniformly mixed to prepare a fenpyrazamine suspension. Then, 30 parts by weight of the suspension was added to 33 parts by weight of the aqueous 5% by weight polyvinyl alcohol (the same as mentioned above) solution. This mixture was stirred thereby emulsifying the fenpyrazamine suspension in the aqueous polyvinyl alcohol solution to obtain a fenpyrazamine emulsion. To the obtained emulsion, 2 parts by weight of the aqueous 1.1% by weight diethylenetriamine (the same as mentioned above) solution was added, followed by stirring at 60°C for 3 to 4 hours to obtain an aqueous suspension composition of a microcapsule containing fenpyrazamine. Twenty (20) parts by weight of the viscosity modifying liquid prepared in Preparation Example 1, 15 parts by weight of water and 65 parts by weight of the above aqueous suspensinon composition were mixed together to obtain the composition (7) of the present invention, containing 10% by weight of fenpyrazamine. A microcapsule containing fenpyrazamine had an average particle diameter of 32.0 µm.

### Preparation Example 8 (Reference)

Ten (10) parts by weight of allethrin, 0.2 part by weight of polyisocyanate (manufactured by Sumika Bayer Urethane Co., Ltd. under the trade name of Sumidur L-75), and 19.8 parts by weight of an aromatic hydrocarbon (manufactured by ExxonMobil Chemical Ltd. under the trade name of Solvesso 200ND) were mixed together to obtain an allethrin solution. Then, 30 parts by weight of the solution was added to 33 parts by weight of an aqueous 5% by weight polyvinyl alcohol (manufactured by The Nippon Synthetic Chemical Industry Co., Ltd. under the trade name of GOHSENOL GH-17) solution. This mixture was stirred by a rotor-stator homogenizer (manufactured by KINEMATICA AG under the trade name of POLYTRON homogenizer) thereby emulsifying the allethrin solution in the aqueous polyvinyl alcohol solution to obtain a allethrin emulsion. To the obtained emulsion, 2 parts by weight of an aqueous 1.2% by weight diethylenetriamine (manufactured by Wako Pure Chemical Industries, Ltd.) solution was added, followed by stirring at 60°C for 3 to 4 hours to obtain an aqueous suspension composition of a microcapsule containing allethrin.
Twenty (20) parts by weight of the viscosity modifying liquid prepared in Preparation Example 1, 15 parts by weight of water, and 65 parts by weight of the above aqueous suspension composition were mixed together to obtain the composition (8) of the present invention, containing 10% by weight of allethrin. A microcapsule containing allethrin had an average particle diameter of 12.0 µm.

### Preparation Example 9 (Reference)

By perfoming the same operation as in Preparation Example 8, except that the amount of pinamin prepared in Preparation Example 8 was changed from 10 parts by weight to 5 parts by weight, the amount of the aromatic hydrocarbon (the same as mentioned above) was changed from 19.8 parts by weight to 24.8 parts by weight, and the average particle diameter of the microcapsule containing pinamin was changed from 12.0 µm to 39.8 µm by adjusting a stirring force using the rotor-stator homogenizer (the same as mentioned above), the composition (9) of the present invention, containing 5% by weight of allethrin was obtained.

### Preparation Example 10 (Reference)

By perfoming the same operation as in Preparation Example 8, except that prallethrin was used in place of allethrin, and the average particle diameter of the microcapsule containing etoc was changed from 12.0 µm to 30.6 µm by adjusting a stirring force using the rotor-stator homogenizer (the same as mentioned above),the composition (10) of the present invention, containing 10% by weight of prallethrin was obtained.

### Preparation Example 11 (Reference)

By perfoming the same operation as in Preparation Example 10, except that the average particle diameter of the microcapsule containing prallethrin was changed from 30.6 µm to 12.4 µm by adjusting a stirring force using the rotor-stator homogenizer (the same as mentioned above), the composition (11) of the present invention, containing 10% by weight of prallethrin was obtained.

### Preparation Example 12 (Reference)

By perfoming the same operation as in Preparation Example 10, except that the average particle diameter of the microcapsule containing prallethrin was changed from 30.6 µm to 5.9 µm by adjusting a stirring force using the rotor-stator homogenizer (the same as mentioned above), the composition (12) of the present invention, containing 10% by weight of prallethrin was obtained.

Next, Test Example will be shown.

### Test Example 1

The compositions (1) to (12) were respectively diluted with water so as to make each active ingredient concentration to 1,120 ppm. Each of the dilutions (100 µL) was added to a glass petri dish having a diameter of 6 cm, uniformly spread and then air-dried at room temperature. The petri dish was covered with a lid made of quartz glass and placed in a weathering tester (manufactured by Q-Lab Corporation under the trade name of Q-SUN Xenon Accelerated Weathering Tester, Model Xe-3) equipped with a borosilicate filter (manufactured by Q-Lab Corporation under the trade name of Daylight-BB Optical Filter) attached thereto, followed by irradiation with xenon light under the conditions of an intensity at 340 nm of 0.68 W/m² and a temperature of 34°C (34°C as measured by an insulated black panel thermometer) for 6 hours. After irradiation, fenpyrazamine remaining on the petri dish was extracted with acetonitrile, followed by quantitative analysis through high-performance liquid chromatography or gas chromatography. A retention rate was determined by calculating as the weight percentage relative to the amount of fenpyrazamine, allethrin or prallethrin before irradiation.

The results are shown in Table 1.

**[Table 1]**

| Composition used | Component a | Component b | Component c | Component a: Component b (weight ratio) | Average particle diameter (µm) | Retention rate (%) |
|---|---|---|---|---|---|---|
| Composition (1) of the present invention | fenpyrazamine | Aromatic hydrocarbon | - | 34:66 | 40.1 | 31.8 |
| Composition (2) | fenpyrazamine | Aromatic hydrocarbon | - | 17:83 | 44.1 | 2.4 |
| Composition (3) of the present invention | fenpyrazamine | Aromatic hydrocarbon | - | 34:66 | 11.1 | 13.6 |
| Composition (4) | fenpyrazamine | Aromatic hydrocarbon | - | 34.66 | 4.2 | 4.7 |
| Composition (5) | fenpyrazamine | Diisobutyl adipate | - | 34.66 | 33.2 | 23.0 |
| Composition (6) of the present invention | fenpyrazamine | Acetophenone | - | 34.66 | 13.3 | 27.5 |
| Composition (7) of the present invention | fenpyrazamine | Aromatic hydrocarbon | Benzotriazole -based UV absorber | 40:60 | 32.0 | 71.6 |
| Composition (8) | allethrin | Aromatic hydrocarbon | - | 34:66 | 12.0 | 10.3 |
| Composition (9) | allethrin | Aromatic hydrocarbon | - | 17:83 | 39.8 | 73.0 |
| Composition (10) | prallethrin | Aromatic hydrocarbon | - | 34:66 | 30.6 | 33.1 |
| Composition (11) | prallethrin | Aromatic hydrocarbon | - | 34:66 | 12.4 | 20.2 |
| Composition (12) | prallethrin | Aromatic hydrocarbon | - | 34:66 | 5.9 | 17.1 |

## Claims

1. A microcapsule comprising:
(a) an agriculturally active ingredient which includes fenpyrazamine, wherein after irradiation with xenon light of wavelength 290 nm or more at an intensity of 0.68 W/m² at 340 nm for 8 hours the amount of agriculturally active ingredient remaining is less than 50% , wherein the agriculturally active ingredient *per se* is solid at 25°C; and
(b) a water-immiscible organic solvent;
wherein a weight ratio of the agriculturally active ingredient to the water-immiscible organic solvent is from 30:70 to 70:30, and wherein the microcapsule has an volume median diameter of 10 to 45 µm;
wherein the water-immiscible organic solvent(s) is/are one or more water-immiscible organic solvent(s) selected from the group consisting of aromatic ketones and aromatic hydrocarbons.

2. A microcapsule according to claim 1, wherein the water-immiscible organic solvent(s) comprises acetophenone.

3. A pesticidal composition in the form of an aqueous suspension in which the microcapsule according to claim 1 or claim 2 is suspended in an aqueous continuous phase.

## Patentansprüche

1. Mikrokapsel, umfassend:
(a) einen landwirtschaftlichen Wirkstoff, der Fenpyrazamin umfasst, wobei nach Bestrahlung mit Xenonlicht einer Wellenlänge von 290 nm oder darüber bei einer Intensität von 0,68 W/m² bei 340 nm über 8 Stunden die verbleibende Menge an landwirtschaftlichem Wirkstoff weniger als 50 % beträgt, wobei der landwirtschaftliche Wirkstoff selbst bei 25 °C als Feststoff vorliegt, und
(b) ein mit Wasser nicht mischbares organisches Lösungsmittel,
wobei ein Gewichtsverhältnis von landwirtschaftlichem Wirkstoff zum mit Wasser nicht mischbaren organischen Lösungsmittel von 30:70 bis 70:30 beträgt, und wobei die Mikrokapsel einen mittleren Volumendurchmesser von 10 bis 45 µm aufweist,
wobei es sich bei dem/den mit Wasser nicht mischbaren organischen Lösungsmittel(n) um ein oder mehrere mit Wasser nicht mischbare(s) organische(s) Lösungsmittel handelt, ausgewählt aus der Gruppe bestehend aus aromatischen Ketonen und aromatischen Kohlenwasserstoffen.

2. Mikrokapsel nach Anspruch 1, wobei das/die mit Wasser nicht mischbare(n) organische(n) Lösungsmittel Acetophenon umfasst/umfassen.

3. Pestizidzusammensetzung in Form einer wässrigen Suspension, in der die Mikrokapsel nach Anspruch 1 oder Anspruch 2 in einer kontinuierlichen wässrigen Phase suspendiert ist.

## Revendications

1. Microcapsule comprenant :
(a) un ingrédient actif sur le plan agricole qui contient de la fenpyrazamine, dans lequel, après irradiation avec une lumière au xénon d'une longueur d'onde de 290 nm ou plus à une intensité de 0,68 W/m² à 340 nm pendant 8 heures, la quantité d'ingrédient actif sur le plan agricole restante est inférieure à 50 %, dans lequel l'ingrédient actif sur le plan agricole en tant que tel est solide à 25°C ; et
(b) un solvant organique non miscible avec l'eau ;
dans laquelle le rapport en poids de l'ingrédient actif sur le plan agricole sur le solvant organique non miscible avec l'eau est de 30/70 à 70/30, et dans laquelle la microcapsule a un diamètre médian en volume de 10 à 45 µm ;
dans laquelle le ou les solvants organiques non miscibles avec l'eau est/sont un ou plusieurs solvants organiques non miscibles avec l'eau choisis dans le groupe constitué par les cétones aromatiques et les hydrocarbures aromatiques.

2. Microcapsule selon la revendication 1, dans laquelle le ou les solvants organiques non miscibles avec l'eau comprennent de l'acétophénone.

3. Composition pesticide sous la forme d'une suspension aqueuse dans laquelle la microcapsule selon la revendication 1 ou la revendication 2 est en suspension dans une phase continue aqueuse.
